# EUROPÄISCHE PATENTANMELDUNG

(11) **EP 1 083 016 A2**
(43) Veröffentlichungstag der Anmeldung: **14.03.2001**
(21) Anmeldenummer: 00119244.2
(22) Anmeldetag: 06.09.2000
(51) Int. Cl.: B23D 51/02

(54) **Tischlaubsäge mit einem Sägeblattführungselement**

(30) Priorität: 10.09.1999 DE 29915943 U
(71) Anmelder: Daniel, Alfred, 38110 Braunschweig (DE); Daniel, Werner, 38179 Schwülper (DE)
(72) Erfinder: Daniel, Alfred, 38110 Braunschweig (DE)
(74) Vertreter: Rehmann, Klaus-Thorsten, Dipl.-Ing.

(57) **Zusammenfassung**

Eine Tischlaubsäge mit einem Gestell (12), einer das Gestell (12) abdeckenden Arbeitsplatte (10), einer innerhalb des Gestells (12) angeordneten Hubvorrichtung (15) zum oszilierenden Antreiben eines einseitig in einem mit der Hubvorrichtung (15) verbundenen Befestigungselement (8) befestigten Sägeblattes (6) und einem unterhalb der Arbeitsplatte (10) befestigten Führungselement (1) für das Sägeblatt (6), **zeichnet sich dadurch aus, dass** das Führungsgelement gebildet wird aus einer mit einer Ausnehmung (17) versehenen Halterung (3) und einem mit Spiel in die Ausnehmung (17) einsetzbaren, mit einer Mehrzahl von Längsnuten (11, 11a,...) versehenen Führungsteil (2).

## Beschreibung

Die Erfindung betrifft eine Tischlaubsäge mit einem Gestell, einer das Gestell abdeckenden Arbeitsplatte, einer innerhalb des Gestells angeordneten Hubvorrichtung zum oszillierenden Antreiben eines einseitig in einem mit der Hubvorrichtung verbundenen Befestigungselement befestigten Sägeblattes und einem unterhalb der Arbeitsplatte befestigten Führungselement für das Sägeblatt.

Eine solche Tischlaubsäge ist beispielsweise aus der DE 298 18 417 U1 bekannt. Durch das zusätzliche Sägeblattführungselement unterhalb der Arbeitsplatte und oberhalb des Sägeblattbefestigungselementes wird das Spiel der nur unzureichend biegesteifen Sägeblätter verringert und eine große Präzision beim Sägen gewährleistet. Durch die Sägeblattführung wird ein sehr geringer Sägeblattverschleiß erreicht und durch die einseitige Lagerung kann ein herkömmlicher Sägebügel entfallen. Damit wird der Vorteil erreicht, dass zu sägende Objekte problemlos umgespannt werden und Sägeschnitte zum Beispiel von einem Loch zu einem anderen Loch sehr schnell ausgeführt werden können. Das Sägeblattführungselement der bekannten Tischlaubsäge ist mit einem Längsschlitz versehen, der ein Verbiegen des Sägeblattes in der Richtung des Sägeblattführungselementes verhindert. Der Längsschlitz ist als Nut ausgeführt, so dass das Sägeblatt an einer der schmalen Seiten und an beiden breiten Seiten geführt wird.

Um eine optimale Führungseigenschaft zu gewährleisten, muss das Führungselement auf das jeweils verwendete Sägeblatt abgestimmt sein. Dies hat den Nachteil, dass beim Wechseln des Sägeblattes das Führungselement ebenfalls mitgewechselt werden muss. Dadurch steigen die Rüstzeiten, weil das Führungselement nach dem Auswechseln ausgerichtet werden muss. Die zum Auswechseln und Ausrichten notwendige Zeit ist stark abhängig von der Erfahrung der Bedienperson.

Von dieser Problemstellung ausgehend soll die eingangs beschriebene Tischlaubsäge so verbessert werden, dass der Sägeblattwechsel schnell vollzogen werden kann und keine hohe Rüstzeiten bezüglich des Wechselns und Ausrichtens des Führungselementes erfordert.

Zur Problemlösung zeichnet sich eine gattungsgemäße Tischlaubsäge dadurch aus, dass das Führungselement gebildet wird aus einer mit einer Ausnehmung versehenen Halterung und einem mit Spiel in die Ausnehmung einsetzbaren, mit einer Mehrzahl von Längsnuten versehenen Führungsteil.

Durch die zweiteilige Ausgestaltung des Führungselementes braucht nach einem Wechsel des Sägeblattes nur das Führungsteil innerhalb der Ausnehmung in der Halterung so verdreht werden, dass eine dem Sägeblatt entsprechende Längsnut die Führung übernehmen kann. Da die Halterung in ihrer Lage nicht verändert wird, ist ein Ausrichten des Führungselementes insgesamt nicht notwendig.

Vorzugsweise ist das Führungsteil in der Ausnehmung fixierbar, so dass das Spiel zwischen Ausnehmung und Führungsteil weniger exakt eingehalten werden muss, um ein Verdrehen des Führungsteiles während des Arbeitens zu vermeiden. Vorzugsweise wird die Fixierung mittels einer Schraube bewirkt. Durch diese Ausgestaltung werden die Herstellkosten gering gehalten.

Wenn die Nuten untereinander verschiedene Querschnittsmaße aufweisen, können sowohl unterschiedlich breite als auch unterschiedlich starke Sägeblätter verwendet werden.

Die Nuten sind vorzugsweise in radialer Richtung eingeschnitten. Wenn die Ausnehmung im Querschnitt kreisrund und das Führungsteil dann zylindrisch ausgebildet ist, kann eine maximale Anzahl unterschiedlicher Führungsnuten realisiert werden.

Wenn zu mindestens einer radialen Nut eine hierzu parallel verlaufende Nut vorgesehen ist, kann mit zwei Sägeblättern gleichzeitig gearbeitet werden. Damit können beispielsweise Schablonen problemlos ausgesägt werden. Denkbar ist auch, beidseitig zu einer radialen Nut je eine parallel verlaufende Nut vorzusehen, so dass mit drei Sägeblättern parallel gearbeitet werden kann.

Wenn das Führungsteil im Querschnitt mehreckig, insbesondere sechseckig ausgebildet ist, kann die Justierung der Führungsnut erheblich verbessert werden. In Verbindung mit einer Schraube, die die Fixierung des Führungsteiles übernimmt, kann auch die Einspannung bei einem mehreckigen Querschnitt erhöht werden. Vor allem beim Zurücksetzen während des Sägevorganges wird durch die verbesserte Fixierung auch die Sicherheit gesteigert.

Wenn die Ausnehmung in Längsrichtung abgestuft ausgebildet ist, kann sich das Führungsteil auf der Stufe abstützen, so dass beim Lösen der Fixierung zum Sägeblattwechsel von der Bedienperson keine Haltekräfte in vertikaler Richtung aufgebracht werden müssen, was die Arbeit deutlich erleichtert.

Wenn die Halterung unterhalb einer in der Arbeitsplatte vorgesehenen Bohrung angeordnet ist, und die Bohrung eine radiale Verbreiterung aufweist, kann verhindert werden, dass sich Sägespäne aufstaut, die im schlechtesten Fall zu einem Festfressen des Sägeblattes führen kann. Außerdem können die Sägespäne dank der Verbreiterung besser von unten abgesaugt werden.

Mit Hilfe einer Zeichnung sollen Ausführungsbeispiele der Erfindung nachfolgend näher erläutert werden. Es zeigt:
- Figur 1 -: eine Tischlaubsäge im Querschnitt;
- Figur 2 -: eine vergrößerte Teildarstellung aus Figur 1;
- Figur 3 -: eine Einzelheit aus Figur 1;
- Figur 4 -: die Draufsicht auf ein Führungsteil;
- Figur 5 -: die Seitenansicht des Führungsteils nach Figur 4;
- Figur 6 -: eine Teildraufsicht auf die Tischlaubsäge;

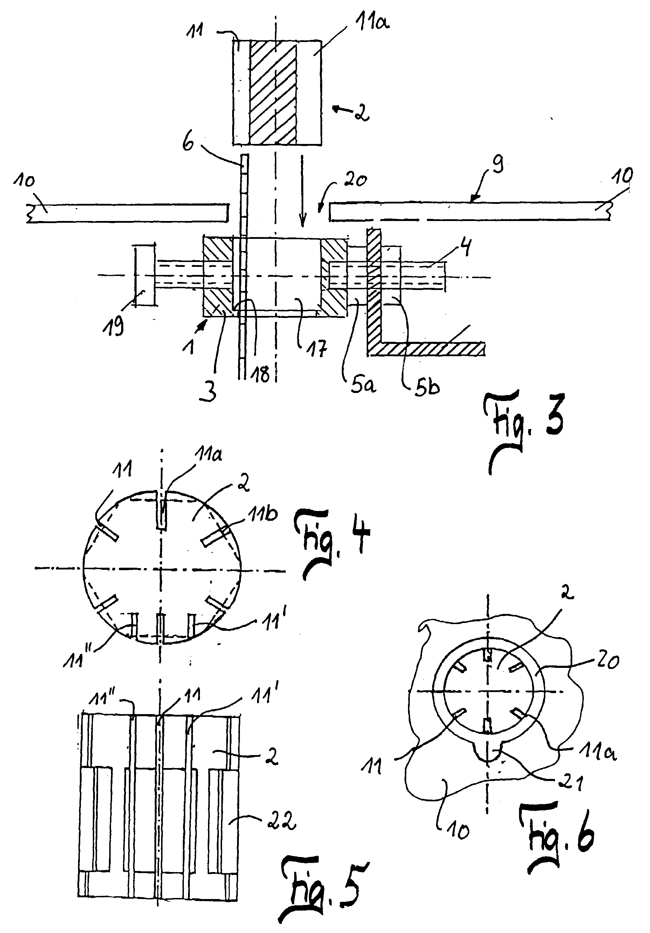

- Figur 7 -: die Draufsicht auf ein Führungsteil nach einer weiteren Ausführungsform;
- Figur 8 -: den Schnitt entlang der Linie VIII-VIII nach Figur 7;
- Figur 9 -: die Draufsicht auf ein Führungselement;

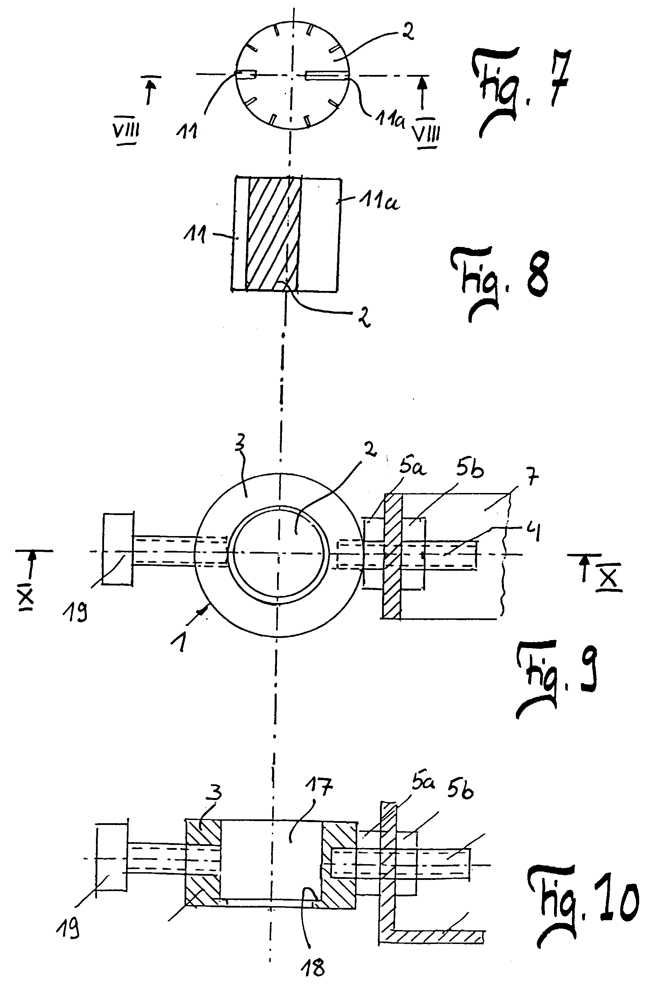

- Figur 10-: den Schnitt entlang der Linie X-X nach Figur 9;

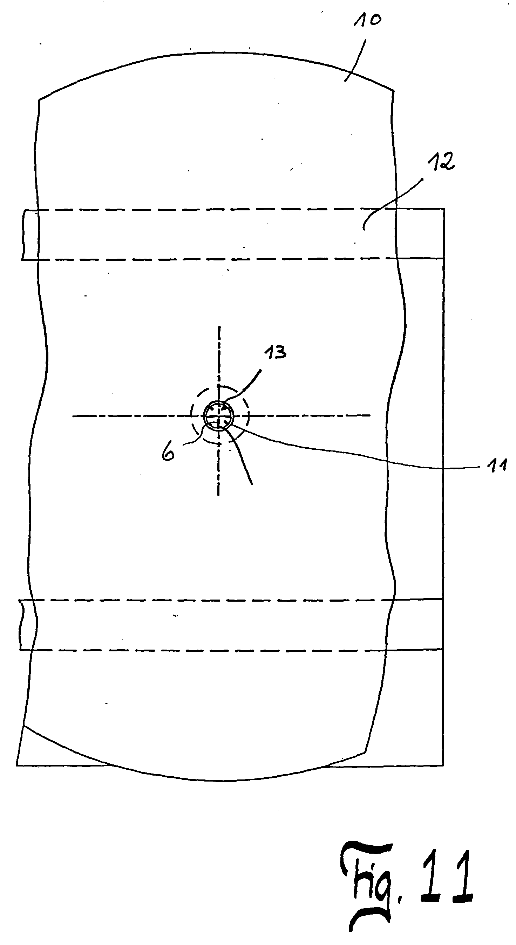

- Figur 11-: die Ansicht gemäß Sichtpfeil XI nach Figur 1.

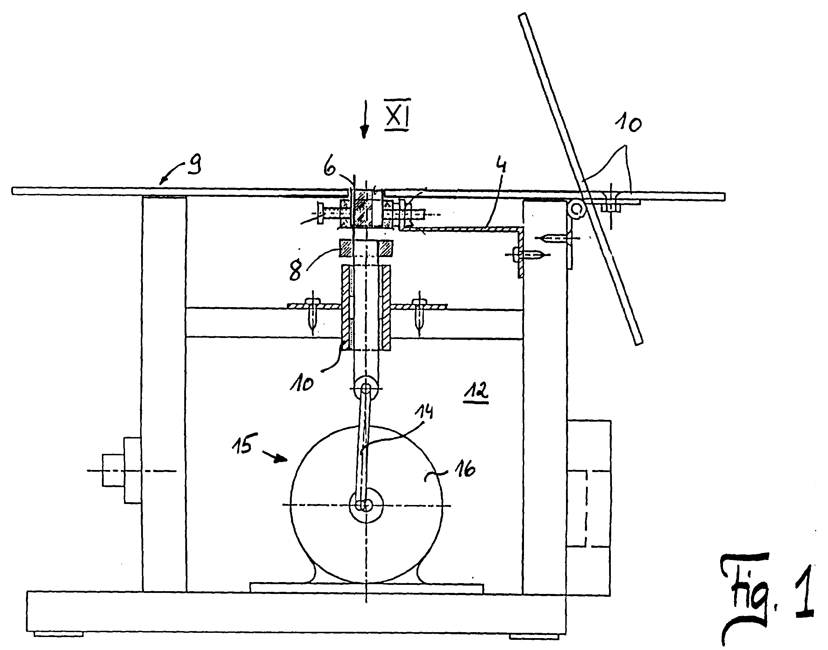

Figur 1 zeigt eine Tischlaubsäge im Querschnitt. Sie besteht aus einem quaderförmigen Unterbau als Gestell 12, in dem sich eine Hubvorrichtung 15 befindet, die aus einem Antriebsmotor 16 und einer Hubstange 14 gebildet wird. Am oberen Ende der Hubstange 14 ist ein Befestigungselement 8 angeordnet, in dem ein Sägeblatt 6 befestigt werden kann. Die Hubstange 14 wird in einer Buchse 10 so geführt, dass das Sägeblattbefestigungselement 3 und das Sägeblatt 6 eine lineare Auf- und Abbewegung ausführt. Die Buchse 10 ist vorteilhafterweise eine zylinderförmige Hülse mit einer Bronzeführung. Oberhalb des Befestigungselements 8 ist das Führungselement 8 gestellfest vorgesehen. Das Führungselement 1 besteht aus der Halterung 3 und dem darin eingesetzten Führungsteil 2. Die Halterung 3 ist über einen Bolzen 4 an einer mit dem Gestell 12 verbundenen Halterung 7 befestigt. Damit die Halterung 3 gegenüber der Arbeitsplatte 10 bzw. der darin vorgesehenen Bohrung 20 ausgerichtet werden kann, sind beidseitig zur Halterung 7 Schrauben 5a, 5b vorgesehen.

Die Halterung 3 weist eine zentrale Ausnehmung 17 aus, die so ausgebildet ist, dass sich in ihrem unteren Bereich eine Stufe 18 bildet. Vorzugsweise ist die Ausnehmung 17 kreisrund ausgebildet. In der Ausnehmung 17 ist das Führungsteil 2 mit Spiel angeordnet. Im Führungsteil 2 sind über den Umfang verteilt eine Mehrzahl radialer Führungsnuten 11, 11a, 11b, ... eingeschnitten, die jeweils eine unterschiedliche Querschnittsform aufweisen können. Über die Schraube 19 kann das Führungsteil 2 in der Halterung 3 festgeklemmt werden. Das im Befestigungselement 8 eingespannte Sägeblatt 6 wird durch das Führungselement hindurch nach oben über die Arbeitsplatte 10 hinweg geführt und läuft in der an seine Abmessungen angepassten Führungsnut 11.

Wenn das Sägeblatt 6 gegen eines mit einer anderen Abmessung ausgetauscht werden soll, wird die Schraube 19 gelöst und nach Entnahme des Sägeblattes 6 das Führungsteil 2 in der Halterung 3 so verdreht, dass die für das neu einzusetzende Sägeblatt 6 vorgesehene Nut in die entsprechende Position kommt. Sodann wird das Führungsteil 2 in der Halterung 3 über die Schraube 19 wieder fixiert. Um die Positionierung des Führungsteils 2 zu erleichtern, kann eine Rastung vorgesehen sein, die den zum Verdrehen des Führungsteils 2 notwendigen Kraftaufwand so vergrößert, dass die Bedienperson merkt, dass die Nut die richtige Stellung eingenommen hat. Hierzu könnte beispielsweise eine federbelastete Kugel in der Halterung und entsprechende kalottenförmige Vertiefungen im Führungsteil 2 vorgesehen sein, die jeweils denselben Abstand zur Mittellinie jeder Nut haben.

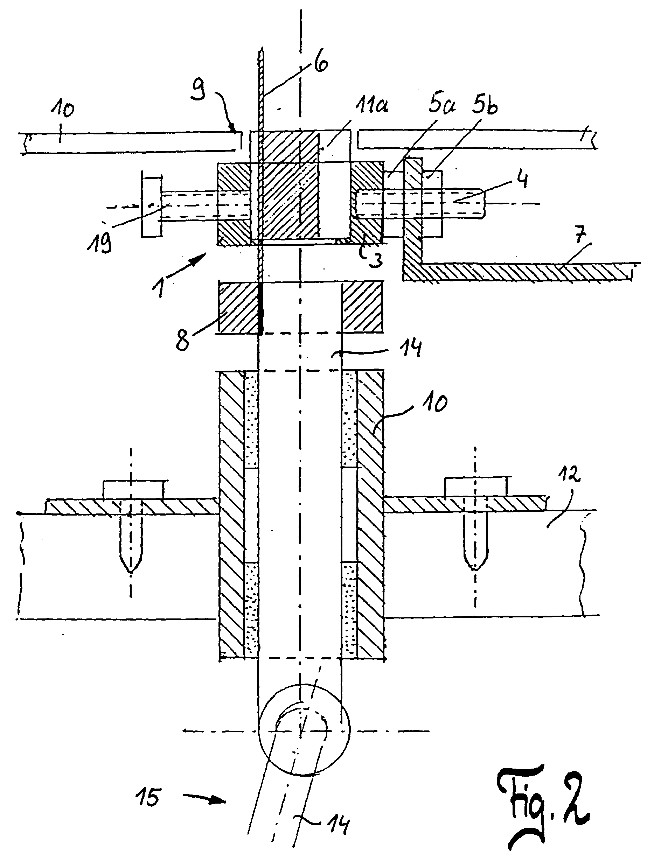

Wie Figur 4 zeigt, kann das Führungsteil 2 zylindrisch oder im Querschnitt sechseckig ausgebildet sein. Der sechseckige Querschnitt bietet den Vorteil, dass das Führungselement 2 in einer kreisrunden Ausnehmung 17 gedreht werden kann, um die entsprechende Führungsnut 11, 11a in Position zu bringen, und gleichzeitig eine bessere Fixierung möglich wird, weil die Schraube 19 eine größere Angriffsfläche findet und nicht nur punktförmig die Fixierkraft aufgebracht werden kann. Parallel zu mindestens einer radial eingebrachten Führungsnut 11 können Führungsnute 11', 11'' vorgesehen sein, so dass mehrere Sägeblätter 6 parallel eingesetzt werden können und zwei oder drei Schnitte gleichzeitig ausführbar sind. Der sechseckige Querschnitt kann partiell oder über die volle Höhe des Führungsteiles 2 vorgesehen sein. Um die Führungseigenschaften der Führungsnuten 11, 11a, 11b, ... nicht zu beeinträchtigen, ist der mehreckige Querschnitt vorzugsweise nur im mittleren Bereich 22, in dem die Schraube 19 angreift, vorgesehen.

Wie Figur 6 zeigt, kann die in der Arbeitsplatte 10 vorgesehene Bohrung 20 eine radiale Verbreiterung 21 aufweisen. Diese radiale Verbreiterung 21 verhindert, dass sich Sägespäne aufstauen, die zu einer Blockierung des Messers 6 und damit einer Überlastung des Antriebsmotors 16 führen können. Außerdem erleichtert die Verbreiterung 21 das Absaugen der Späne aus dem Inneren des Gestells 12 heraus. Das Führungsteil 2 liegt auf der Stufe 18 in der Halterung 3 auf und schließt plan mit der Arbeitsfläche 9 ab. Dadurch wird das hier nicht näher dargestellte Werkstück im Bereich des Sägeblattes 6 großflächig abgestützt.

Die Nuten 11, 11a können sowohl unterschiedliche Breiten als auch unterschiedliche Tiefen aufweisen. Über die Länge des Führungsteiles 3 ist der Querschnitt der Nuten 11, 11a, ... konstant. Die Tiefe der Nuten 11, 11a ist abhängig von der gewünschten Sägeblattstärke. Das heißt, einem zum Beispiel 0,5 mm starken Sägeblatt wird eine Führungsnut von 1 mm Tiefe zugeordnet. Ein Herausspringen des Sägeblattes 6 aus dem Führungsteil 2 ist nicht möglich, weil es innerhalb der Nut 11 allseitig umklammert wird. Die präzise Einfassung des Sägeblattes 6 führt in vorteilhafter Weise zu einem sehr geringen Sägeblattverschleiß.

Vorzugsweise ist das Führungsteil 2 aus Messing, Bronze oder gehärtetem Stahl gefertigt. Die Halterung 3 ist vorzugsweise aus Stahl gefertigt.

Durch die einseitige Einspannung des Sägeblattes 6 im Befestigungselement 8 ist eine variable Länge des Sägeblattes und somit eine nach oben offene Schnitttiefe gewährleistet. Um eine optimale Schnitttiefe einzustellen, können handelsübliche Sägeblätter in ihrer Länge einfach gekürzt werden.

### Bezugszeichenliste

- 1: Führungselement
- 2: Führungsteil
- 3: Halterung
- 4: Bolzen
- 5a: Schraube
- 5b: Schraube
- 6: Sägeblatt
- 7: Halterung
- 8: Befestigungselement
- 9: Arbeitsfläche
- 10: Buchse
- 11: Längsnut/Führungsnut
- 11a: Längsnut/Führungsnut
- 12: Gestell
- 13: Öffnung
- 14: Hubstange
- 15: Hubvorrichtung
- 16: Antriebsmotor
- 17: Ausnehmung
- 18: Stufe
- 19: Schraube
- 20: Bohrung
- 21: Verbreiterung

## Patentansprüche

1. Tischlaubsäge mit einem Gestell (12), einer das Gestell (12) abdeckenden Arbeitsplatte (10), einer innerhalb des Gestells (12) angeordneten Hubvorrichtung (15) zum oszilierenden Antreiben eines einseitig in einem mit der Hubvorrichtung (15) verbundenen Befestigungselement (8) befestigten Sägeblattes (6) und einem unterhalb der Arbeitsplatte (10) befestigten Führungselement (1) für das Sägeblatt (6), **dadurch gekennzeichnet, dass** das Führungsgelement gebildet wird aus einer mit einer Ausnehmung (17) versehenen Halterung (3) und einem mit Spiel in die Ausnehmung (17) einsetzbaren, mit einer Mehrzahl von Längsnuten (11, 11a,...) versehenen Führungsteil (2).

2. Tischlaubsäge nach Anspruch 1, **dadurch gekennzeichnet, dass** das Führungsteil (2) in der Ausnehmung (17) fixierbar ist.

3. Tischlaubsäge nach Anspruch 1, **dadurch gekennzeichnet, dass** die Nuten (11, 11a, ...) untereinander verschiedene Querschnittsmaße aufweisen.

4. Tischlaubsäge nach Anspruch 1, **dadurch gekennzeichnet, dass** die Nuten (11, 11a, ...) in radialer Richtung eingeschnitten sind.

5. Tischlaubsäge nach Anspruch 4, **dadurch gekennzeichnet, dass** zumindest zu einer radialen Nut (11) mindestens eine hierzu parallel verlaufende Nut (11') vorgesehen ist.

6. Tischlaubsäge nach Anspruch 5, **dadurch gekennzeichnet, dass** zwei parallel verlaufende Nuten (11', 11'') vorgesehen sind.

7. Tischlaubsäge nach Anspruch 6, **dadurch gekennzeichnet, dass** die parallel verlaufende Nuten (11', 11'') beidseitig zur radial verlaufenden Nut (11, 11a, ...) angeordnet sind.

8. Tischlaubsäge nach Anspruch 1, **dadurch gekennzeichnet, dass** die Ausnehmung (17) im Querschnitt kreisrund und das Führungsteil (2) zylindrisch ist.

9. Tischlaubsäge nach Anspruch 1, **dadurch gekennzeichnet, dass** die Ausnehmung (17) im Querschnitt rund und das Führungsteil (2) im Querschnitt mehreckig, insbesondere sechseckig ausgebildet ist.

10. Tischlaubsäge nach Anspruch 2, **dadurch gekennzeichnet, dass** das Führungsteil (2) in der Ausnehmung (17) mittels einer Schraube (19) fixierbar ist.

11. Tischlaubsäge nach einem oder mehreren der vorstehenden Ansprüche, **dadurch gekennzeichnet, dass** die Ausnehmung (17) abgestuft ausgebildet ist und sich das Führungsteil (2) auf der Stufe (18) abstützt.

12. Tischlaubsäge nach Anspruch 1, **dadurch gekennzeichnet, dass** die Lage der Halterung (3) zur Arbeitsplatte (10) einstellbar ist.

13. Tischlaubsäge nach einem oder mehreren der vorstehenden Ansprüche, **dadurch gekennzeichnet, dass** die Halterung (3) unterhalb einer in der Arbeitsplatte (10) vorgesehenen Bohrung (20) angeordnet ist und die Bohrung (20) eine Verbreiterung (21) aufweist.

14. Führungselement für eine Tischlaubsäge nach einem oder mehreren der Ansprüche 1 bis 13, **gekennzeichnet durch** eine mit einer Ausnehmung (17) versehene Halterung (3) und einem mit Spiel in die Ausnehmung (17) einsetzbaren, mit einer Mehrzahl von Längsnuten (11, 11a, ...) versehenen Führungsteil (2).
